# EUROPEAN PATENT APPLICATION

(11) **EP 4 733 180 A1**
(43) Date of publication of application: **29.04.2026**
(21) Application number: 25210926.9
(22) Date of filing: 24.10.2025
(51) Int. Cl.: B62J 6/055, B62J 6/02, B62J 17/10

(54) **STRADDLED VEHICLE**

(30) Priority: 24.10.2024 JP 2024187812
(71) Applicant: Yamaha Hatsudoki Kabushiki Kaisha, Iwata-shi, Shizuoka 438-8501 (JP)
(72) Inventor: HOSHIBA, Jun, Iwata-shi, Shizuoka, 4388501 (JP)
(74) Representative: Zimmermann, Tankred Klaus

(57) **Abstract**

The present teaching aims to provide a straddled vehicle capable of providing a visibility of a flasher from an inner viewing angle, and also capable of suppressing a size increase of a peripheral part of a headlight while suppressing a size increase of a dummy tank or a cover in vehicle width direction in a front view. A straddled vehicle 1 of the present teaching has a flasher outer lens 51 disposed in a forward surface portion 11 of a cover 10. The flasher outer lens 51 is located farther rearward Y2 than the axis La of a front fork 22 at a handlebar neutral position Pn in a side view. At least a half of an up-down full length D1 of the flasher outer lens 51 is located farther upward H1 than a lower end 41a of a headlight outer lens 41 at the handlebar neutral position Pn. The flasher outer lens 51 has a horizontally elongated shape in a front view of the flasher outer lens 51.

## Description

### Technical Field

The present teaching relates to a straddled vehicle including a flasher.

### Background Art

Conventionally provided is a straddled vehicle with a headlight configured to move together with a steering mechanism as a handlebar is manipulated. For example, there is a straddled vehicle including a steering mechanism configured by a front fork, which supports a front wheel, being coupled to a steering shaft via a lower bracket and an upper bracket, and the steering shaft being coupled to the handlebar so that the steering mechanism is capable of being rotationally moved by a manipulation on the handlebar. Such a straddled vehicle in which the steering mechanism including the front fork, the lower bracket, and the upper bracket is rotationally moved by a manipulation on the handlebar may sometimes have a headlight attached to the steering mechanism. Some of the straddled vehicles of this type may have the headlight configured to move as the handlebar is manipulated. Examples of the straddled vehicle with the headlight configured to move as the handlebar is manipulated include what is called a naked-type straddled vehicle.

The straddled vehicle with the headlight configured to move as the handlebar is manipulated may sometimes have a flasher that moves together with the headlight as the handlebar is manipulated. For example, there is a flasher of a type (stalk-type) that is attached to a headlight via a bracket and that projects from the headlight in vehicle width direction, like a flasher disclosed in PTL 1 listed below. If the straddled vehicle with the headlight configured to move as the handlebar is manipulated has a stalk-type flasher disposed in the headlight, the flasher projects left and right of the vehicle, resulting in a size increase of the headlight and a peripheral part of the headlight, which serves as a range where members (such as a meter, the front fork, and the upper and lower brackets) that rotationally move together with the headlight as the handlebar is manipulated are present.

The flasher, on the other hand, may sometimes be disposed so as not to move together with the headlight as the handlebar is manipulated, for example. For example, in a straddled vehicle according to PTL 2 listed below, a flasher (built-in type flasher) is disposed in a shroud, which extends from a tank side. In the straddled vehicle according to PTL 2, the flasher is disposed farther forward than the axis of the front fork.

### Citation List

### Patent Literature

PTL 1 : Japanese Patent Application Laid-Open No. 2011-235881
PTL 2: Japanese Patent Application Laid-Open No. 2013-63707

### Summary of Invention

### Technical Problem

Here, in the straddled vehicle in which the steering mechanism including the front fork, the lower bracket, and the upper bracket is rotationally moved by a manipulation on the handlebar, the front fork extends up to a position (height) at which the headlight is present. Thus, in the straddled vehicle in which the steering mechanism including the front fork, the lower bracket, and the upper bracket is rotationally moved by a manipulation on the handlebar, the size of a cover (such as a tank cover and a shroud) that covers at least a part of a lateral side of a fuel tank in a side view tends to increase in the vehicle width direction in a front view, as compared to a straddled vehicle of a type in which left and right fork legs of a front fork are coupled so as to branch off from the lower end of a steering shaft.

For example, if, in the straddled vehicle in which the steering mechanism including the front fork, the lower bracket, and the upper bracket is rotationally moved by a manipulation on the handlebar, like in the straddled vehicle according to PTL 2, the shroud is present up to a position farther forward than the axis of the front fork; the shroud needs to be configured so as to project outward in the vehicle width direction (farther outward than a range of motion of the front fork), in order to maintain the range of motion of the front fork. This results in an increase in the size of the shroud in the vehicle width direction in a front view. On the other hand, there is a demand for suppression of the size in the vehicle width direction in a front view of the cover (such as the tank cover and the shroud) that covers at least a part of a lateral side of the fuel tank in a side view and the size increase of the peripheral part of the headlight.

In the straddled vehicle, it is desirable that a flasher (direction indicator) be visible in a predetermined range. For example, it is desirable that a flasher be visible in a range (inner viewing angle) enclosed by a vertical plane including the center of the flasher and extending in parallel to an advancing direction (forward-rearward direction) of the vehicle and a plane having a predetermined angle inward of the flasher from the vertical plane.

The present teaching aims to provide a straddled vehicle including a steering mechanism configured by a front fork, which supports a front wheel, being coupled to a steering shaft via a lower bracket and an upper bracket, and the steering shaft being coupled to a handlebar so that the steering mechanism is capable of being rotationally moved by a manipulation on the handlebar, the straddled vehicle being capable of providing a visibility of a flasher from an inner viewing angle, and also capable of suppressing a size increase of a peripheral part of a headlight, while improving the degree of freedom in designing a layout of the flasher so as to suppress a size increase of a dummy tank or a cover, which covers at least a part of a lateral side of a fuel tank in a side view, in vehicle width direction in a front view.

### Solution to the Problem

The inventor of the present application examined a configuration capable of providing a visibility of a flasher from an inner viewing angle, also capable of suppressing a size increase of a peripheral part of a headlight, and moreover capable of suppressing a size increase of a cover or a dummy tank (which may be hereinafter referred to as "cover or the like"), which covers at least a part of a lateral side of a fuel tank in a side view, in vehicle width direction in a front view. First, the inventor of the present application examined a configuration (built-in type) in which a flasher of a stalk-type, which is conventionally attached to a headlight, is disposed in a vehicle body such as a cover or a dummy tank for covering a tank. As a result, the inventor of the present application arrived at the findings that it is possible to suppress a size increase of a peripheral part of a headlight if the flasher is disposed in a cover or the like (vehicle body).

If the flasher is disposed in the vehicle body, for example, it is desirable that the flasher be arranged at about the same height as a conventional stalk-type flasher would be arranged (about the same height as the headlight). The inventor of the present application examined providing the flasher in a forward surface portion of the cover or the like and arranging the flasher at about the same height as the semaphore type would be arranged (about the same height as the position of the headlight) and farther rearward than the axis of a front fork. However, it turned out that if the flasher is at about the same height as the headlight and farther rearward than the axis of the front fork at a handlebar neutral position, for example, the flasher is hidden by the headlight or the front fork, which makes it difficult to provide a visibility of the flasher from the inner viewing angle. On the other hand, if the cover or the like is configured to extend farther forward than the axis of the front fork while a range of motion of the front fork is maintained, and the flasher is disposed in a forward portion of the cover or the like (the flasher is disposed so as to come forward); the flasher is easy to see, but the size of the cover or the like in the vehicle width direction is increased in a front view. Thus, if the flasher is disposed forward, the flasher is easy to see, but an interference of the front fork with the cover or the like needs to be avoided, which results in a size increase of the cover or the like in the vehicle width direction in a front view. If the flasher is disposed rearward, a size increase of the cover or the like in the vehicle width direction is able to be suppressed in a front view, but the flasher is difficult to see.

Then, the inventor of the present application examined the shape of the flasher. To be specific, the inventor of the present application considered adopting a flasher having an outer lens with a horizontally elongated shape, as a flasher capable of providing a visibility of the flasher from the inner viewing angle in a case where the flasher is arranged at a position in the forward surface portion of the cover or the like, the position being at about the same height as the headlight and farther rearward than the axis of the front fork at the handlebar neutral position. The flasher having a horizontally elongated shape provides a wide range of options for the position of the flasher at which the flasher is visible from the inner viewing angle. That is, in a case of a flasher having a vertically elongated shape, it is unavoidable that the flashers are arranged at positions near the left and right outward ends of the cover or the like, in order that the positions of the flashers can be at about the same height as the headlight and farther rearward than the axis of the front fork at the handlebar neutral position while providing a visibility of the flashers from the inner viewing angle. In this respect, the flasher having a horizontally elongated shape improves the degree of freedom in designing a layout of the flasher, as compared to the flasher having a vertically elongated shape.

For example, in a case of an outer lens having a horizontally elongated shape, even if the outer lens is arranged in a tilted posture, the outward end portion of the flasher is not likely to be hidden by the headlight or the front fork, and easy to see, when viewed from the inner viewing angle. For example, the outer lens having a horizontally elongated shape provides a wide range of options (provides variations of a position that can be selected) for the up-down position and the left-right position at which at least a part (e.g., an end portion in the vehicle width direction) of the flasher is visible when viewed from the inner viewing angle.

In this manner, the outer lens of the flasher having a horizontally elongated shape improves the degree of freedom of a layout (including the arrangement posture, the up-down position, and the left-right position) that makes at least a part (e.g., an end portion in the vehicle width direction) of the flasher visible without being hidden by the headlight or the front fork when the flasher is viewed from the inner viewing angle. Accordingly, for example, in a case where the design such as the size and shape of the cover or the like is unchanged or a case where the size and shape of the cover or the like are changed, the flasher having a horizontally elongated shape makes it possible to arrange the flasher at about the same height as the headlight and farther rearward than the axis of the front fork, provide a wide range of options for the position that can provide a visibility of the flasher from the inner viewing angle, and suppress a size increase of the cover or the like in the vehicle width direction in a front view.

Thus, the flasher having a horizontally elongated shape, if arranged at about the same height as the headlight and farther rearward than the axis of the front fork at the handlebar neutral position, makes it easy to provide a visibility of the flasher from the inner viewing angle, and also to suppress the size of the cover or the like in the vehicle width direction. Accordingly, it is possible to provide a visibility of the flasher from the inner viewing angle, while suppressing a size increase of the cover or the like in the vehicle width direction in a front view.

Straddled vehicles according to aspects of the present teaching, which has been accomplished based on the findings described above, have the following configurations.

A straddled vehicle of (1) includes: a steering mechanism including a front fork, a steering shaft, and an upper bracket and a lower bracket, the front fork supporting a front wheel, the steering shaft being rotationally moved in conjunction with a manipulation of a handlebar, the upper bracket and the lower bracket coupling the front fork to the steering shaft, the steering mechanism being configured to be displaced from a handlebar neutral position by a manipulation of the handlebar, the handlebar neutral position being a position for the vehicle to travel straight; a headlight configured to rotationally move along with the steering mechanism, at least a part of the headlight being arranged between the lower bracket and the upper bracket; a dummy tank or a cover that covers at least a part of a lateral side of a fuel tank in a side view; and a flasher having an outer lens, the outer lens of the flasher being disposed in a forward surface portion of the dummy tank or the cover such that the outer lens does not move together with the headlight as the handlebar is manipulated, the outer lens being located farther rearward than the axis of the front fork at the handlebar neutral position in a side view, the outer lens being disposed such that at least a half of its full length in up-down direction is located farther upward than a lower end of an outer lens of the headlight at the handlebar neutral position, the outer lens having a horizontally elongated shape so that its full length in horizontal direction is larger than its full length in the up-down direction in a front view of the outer lens of the flasher.

The straddled vehicle of (1) above is capable of downsizing a peripheral part of the headlight, as compared to a headlight having a flasher of a stalk-type. Therefore, in the straddled vehicle in which the steering mechanism including the front fork, the lower bracket, and the upper bracket is rotationally moved by a manipulation of the handlebar, the outer lens of the flasher is able to be arranged at a position in the forward surface portion of the cover or the dummy tank, the position being farther rearward than the axis of the front fork, and in addition a half or more of the up-down full length of the outer lens of the flasher is able to be arranged farther upward than the lower end of the outer lens of the headlight. Moreover, due to the horizontally elongated shape of the outer lens of the flasher, it is possible to improve the degree of freedom in designing a layout of the flasher such that at least a part (e.g., an outward end portion in the vehicle width direction) of the outer lens of the flasher is visible when the flasher is viewed from the inner viewing angle. Thus, it is possible to increase the viewability of the outer lens of the flasher while suppressing the size of the cover or the dummy tank in the vehicle width direction in a front view. Accordingly, it is possible to provide a visibility of the flasher from the inner viewing angle while suppressing a size increase of the cover or the dummy tank in the vehicle width direction in a front view.

In an aspect of the present teaching, the straddled vehicle may adopt the following configuration.

(2) In the straddled vehicle according to (1) above, the outer lens of the flasher is located such that the entirety of its full length in the up-down direction is located farther upward than the lower end of the outer lens of the headlight at the handlebar neutral position.

The straddled vehicle of (2) above, in which the flasher is disposed as high as the headlight, is capable of providing a good visibility of the flasher.

In an aspect of the present teaching, the straddled vehicle may adopt the following configuration.

(3) In the straddled vehicle according to (1) or (2) above: the flasher further includes an inner lens and a light source; and the inner lens is configured such that light from the light source enters inside of the inner lens through an inward end portion of the inner lens in vehicle width direction, and light incident on the inner lens exits to forward of the vehicle.

In the flasher of the straddled vehicle of (3) above, light enters through the inward end portion (a left end portion or a right end portion) of the inner lens in the vehicle width direction, so that light is likely to exit widely in the lateral direction, which makes it easy to satisfy not only a requirement about the inner viewing angle but also a requirement about the outer viewing angle. In the foregoing straddled vehicle, even if the number of light sources is small (for example, one), a large irradiation portion (a portion that allows light of the light source to pass therethrough to the outside) of the inner lens of the flasher is obtained, so that light can exit efficiently.

In an aspect of the present teaching, the straddled vehicle may adopt the following configuration.

(4) In the straddled vehicle according to (3) above, the inner lens has an attachment portion, the attachment portion being disposed in at least either an upward portion or a downward portion of the inner lens.

In the straddled vehicle of (4) above, the inner lens is, in its upper or lower portion, attached to an attachment object member (e.g., a substrate or a housing), and therefore the full length of the inner lens in the horizontal direction (lateral direction) can be efficiently used as the irradiation portion, which makes it possible to increase the irradiation portion while suppressing a size of the entire flasher in the width direction.

In an aspect of the present teaching, the straddled vehicle may adopt the following configuration.

(5) In the straddled vehicle according to any of (1) to (4) above, the outer lens of the flasher is configured to be at least partially visible from a specific position in a case where the steering mechanism is at a maximum displacement position.

The straddled vehicle of (5) above, in which an inner viewing angle of the flasher is obtained in a range from where the steering mechanism is at the handlebar neutral position to where the steering mechanism is at the maximum displacement position, is capable of providing a good visibility of the flasher.

In an aspect of the present teaching, the straddled vehicle may adopt the following configuration.

(6) In the straddled vehicle according to any of (1) to (4) above, the outer lens of the flasher is configured to be at least partially visible from a specific position in a case where the steering mechanism is at the handlebar neutral position, and to be entirely hidden by the headlight when viewed from the specific position in a case where the steering mechanism is at a maximum displacement position.

The above-described straddled vehicle allows an inner viewing angle of the flasher to be obtained when the steering mechanism is at the handlebar neutral position, while further enhancing the degree of freedom of a layout of the flasher so that the suppression of the size increase of the cover or the dummy tank in the vehicle width direction in a front view can be further effective.

The "straddled vehicle" refers to a vehicle of a type in which a rider sits astride a saddle. Examples of the straddled vehicle include motorcycles of moped types, off-road types, and on-road types. The straddled vehicle is not limited to motorcycles, but may be a four-wheeled motor vehicle, a motor tricycle, an all-terrain vehicle (ATV), or the like, for example. The motor tricycle may include two front wheels and one rear wheel, or may include one front wheel and two rear wheels. A rear wheel or a front wheel of the straddled vehicle may serve as a driving wheel. Both a rear wheel and a front wheel may serve as driving wheels of the straddled vehicle. The straddled vehicle may be configured to be capable of turning in a leaning posture.

Herein, a state where the straddled vehicle stands upright is described. The "forward-rearward direction" as used herein refers to the forward-rearward direction of the straddled vehicle, unless otherwise stated. The "forward" refers to the forward of the straddled vehicle, and the "rearward" refers to the rearward of the straddled vehicle. The "left-right direction" as used herein refers to the left-right direction (vehicle width direction) in a front view of the straddled vehicle, unless otherwise stated. The "leftward" refers to the leftward in a front view of the straddled vehicle, and the "rightward" refers to the rightward in a front view of the straddled vehicle. The "up-down direction" as used herein refers to the up-down direction of the straddled vehicle, unless otherwise stated. The "upward" refers to the upward of the straddled vehicle, and the "downward" refers to the downward of the straddled vehicle.

The "central vertical cross-section" as used herein means a vertical plane including the center line (vehicle center line) in the forward-rearward direction in a plan view of the straddled vehicle. Herein, in descriptions regarding the left-right direction of the straddled vehicle, a direction toward the central vertical cross-section may be referred to as "inward," and a direction away from the central vertical cross-section may be referred to as "outward."

The "front view" as used herein means a front view (vehicle front view) of the straddled vehicle, unless otherwise stated. The "front view of the flasher outer lens," which will be explained later, means a view from a direction different from the front view of the vehicle, or from the same direction as the front view of the vehicle.

The "steering mechanism" means a mechanism in which the advancing direction of the vehicle is manipulated by the rider's manipulation of the handlebar, for example. The steering mechanism includes the steering shaft, the front fork, the upper bracket, and the lower bracket, for example. The steering mechanism is supported by a vehicle body frame via a headpipe, for example.

The steering mechanism includes the handlebar, for example. The handlebar is able to be manipulated by the rider. The handlebar is coupled to the steering shaft, for example. The steering shaft is, for example, received through the headpipe, and supported by the vehicle body frame in such a manner that the steering shaft can rotate about the central axis. The front fork supports the front wheel. The front fork comprises a pair of front fork legs that are disposed left and right of the front wheel, respectively. The left and right front fork legs are coupled by the upper bracket and the lower bracket. The upper bracket and the lower bracket are members extending left and right. The upper bracket couples upper end portions of the left and right front fork legs. The lower bracket couples the left and right front fork legs, at a location downward of the headpipe. The front fork extending from the vicinity of an axle of the front wheel reaches the height (up-down position) at which the headlight is disposed, for example.

Thus, the steering mechanism has a structure in which the handlebar, the steering shaft, the front fork, the upper bracket, and the lower bracket are mutually coupled. The steering mechanism is capable of manipulation by the handlebar. The steering shaft, the front fork, the upper bracket, and the lower bracket are able to be integrally displaced by a manipulation of the handlebar. Thus, in the straddled vehicle of the present teaching, as the handlebar is manipulated, the front fork, the upper bracket, and the lower bracket are integrally rotated about the steering shaft along with the manipulation of the handlebar. Along with the displacement of the front fork, the front wheel supported by the front fork changes its posture. To be specific, the angle of the front wheel relative to the vehicle center line changes. This is how the advancing direction of the vehicle is able to be manipulated in the straddled vehicle. In other words, in the straddled vehicle, the front wheel is able to be steered through the manipulation of the handlebar.

The steering mechanism may have a configuration in which, for example, the handlebar is mechanically connected to the steering shaft so that a manipulation of the handlebar is directly transmitted to the steering shaft. Alternatively, the steering mechanism may have a configuration in which, for example, a manipulation of the handlebar is transmitted to the steering shaft via an actuator.

As thus far described, in the straddled vehicle of the present teaching, the steering mechanism including the front fork is displaced by a manipulation of the handlebar. In the straddled vehicle of the present teaching, as the handlebar is manipulated, a member (such as the headlight) attached to the steering mechanism is displaced along with displacement of the steering mechanism. Accordingly, in the straddled vehicle of the present teaching, a member (such as the cover) disposed around the steering mechanism is configured so as not to interfere with a range of motion of the steering mechanism and a member that displaces together with the steering mechanism.

Herein, as for the rotation direction of the steering mechanism including the handlebar, the clockwise direction and the counterclockwise direction as viewed from the rider riding on the straddled vehicle may be referred to as "normal direction" and "reverse direction," respectively.

The "handlebar neutral position" means an intermediate position at which the handlebar is not being manipulated, for example. The handlebar neutral position refers to a position of the handlebar at which the vehicle is in a straight-traveling state, for example. At the handlebar neutral position, the front wheel is postured as if it is along the forward-rearward direction of the vehicle. Accordingly, at the handlebar neutral position, the front wheel is oriented in the forward-rearward direction of the vehicle, and once the vehicle is started, the vehicle travels straight.

If the handlebar is manipulated in the normal direction or the reverse direction from the handlebar neutral position, the steering mechanism including the front fork is integrally rotated about the steering shaft along with the manipulation of the handlebar. Along with the displacement of the front fork, the front wheel changes its posture. To be specific, the front wheel changes its posture (angle) in accordance with the angle of the manipulation of the handlebar. Consequently, the straddled vehicle advances in the direction in which the front wheel is oriented.

The "case where the steering mechanism is at the maximum displacement position" means a case where the handlebar is manipulated up to a position corresponding to a maximum manipulatable angle of the handlebar, for example. There are various options for the manipulatable angle of the handlebar. Herein, a case where the handlebar is manipulated up to the maximum manipulatable angle may be referred to simply as "maximum displacement position."

The "headlight" emits light to the forward of the vehicle. The headlight includes a light source for emitting light, and an outer lens. The headlight may include an inner lens. The headlight may include a housing that accommodates the light source.

The headlight is attached to the steering mechanism. Thus, if the steering mechanism is displaced by a manipulation on the handlebar, the headlight rotates about the steering shaft, and changes its position. The headlight is attached to the lower bracket, for example. The headlight may be attached to the handlebar, for example. The headlight may be attached to the upper bracket, for example.

The "peripheral part of the headlight" refers to a range where the headlight and a member that rotationally moves together with the headlight as the handlebar is manipulated are present. The peripheral part of the headlight refers to a range where a member that is attached to the headlight directly or via another member is present, for example. Examples of a member included in the peripheral part of the headlight encompass a meter, the front fork, the upper and lower brackets, and the like.

The outer lens of the headlight functions as a surface that emits light, for example. The outer lens of the headlight is visible from the outside, for example. In other words, the headlight emits light through its portion (outer lens) exposed to the outside. The outer lens of the headlight may be formed integrally with the housing that accommodates the light source and the like. Alternatively, the outer lens of the headlight may be a member separate from the housing, for example.

The "irradiation portion" as used herein means a portion that allows light of the light source to pass therethrough to the outside, for example. The "irradiation portion" is a portion of a member provided as the outer lens, the portion being capable of allowing light of the light source to pass therethrough, for example. In other words, of the member provided as the outer lens, a portion that does not allow light of the light source to pass therethrough is not included in the "irradiation portion." For example, an attachment portion of the member provided as the outer lens, which does not allow light of the light source to pass therethrough, and a portion of the member provided as the outer lens that functions as the housing but does not function as the outer lens because the portion does not allow light of the light source to pass therethrough are not included in the "irradiation portion."

Herein, the "outer lens of the headlight" means a portion that functions as an irradiation portion, for example. The "outer lens of the headlight" means a portion visible from the outside, for example. That is, the "outer lens of the headlight" as used herein means a "headlight irradiation portion," which functions as an irradiation portion through which light of the light source is visible from the outside.

For example, a case is assumed where the outer lens of the headlight constitutes a part of a headlight outer lens member, which is formed integrally with a housing that accommodates the light source and the like, and a portion (e.g., an outer lens portion) of the headlight outer lens member is exposed to the outside while another portion (e.g., a housing portion) of the headlight outer lens member is hidden by another member (e.g., the bracket) and invisible from the outside. In such a case, the "outer lens of the headlight" means a portion (the headlight irradiation portion) through which light of the light source is visible from the outside, and does not include a portion through which light of the light source is invisible from the outside.

For example, a case is assumed where the outer lens of the headlight constitutes a part of a headlight outer lens member, which is formed integrally with a housing that accommodates the light source and the like, and the headlight outer lens member is entirely exposed to the outside, but light of the light source is visible through a portion (e.g., an outer lens portion) of the headlight outer lens member while light of the light source is invisible through another portion (e.g., a housing portion) of the headlight outer lens member. In such a case, the "outer lens of the headlight" means a portion (the headlight irradiation portion) through which light of the light source is visible from the outside, and does not include a portion through which light of the light source is invisible from the outside.

For example, a case is assumed where the outer lens of the headlight is a member separate from the housing, and a portion such as the end of the outer lens is hidden by another member (e.g., the housing) so that light of the light source is invisible through the portion from the outside. In such a case, the "outer lens of the headlight" means a portion (the headlight irradiation portion) through which light of the light source is visible from the outside, and does not include a portion through which light of the light source is invisible from the outside.

Herein, the outer lens of the headlight, when explained, may sometimes be referred to simply as "headlight outer lens" or "headlight irradiation portion."

The headlight outer lens (headlight irradiation portion) is arranged at a height farther upward than at least the front wheel. The headlight outer lens is arranged farther downward than the handlebar, for example. For example, at least a part of the headlight outer lens is arranged between the lower bracket and the upper bracket. The headlight outer lens may be arranged such that its lower end is farther upward than the upper end of the lower bracket, for example. The headlight outer lens may be arranged such that a part of it is farther downward than the upper end of the lower bracket, for example.

The "fuel tank" stores a fuel such as gasoline, for example. The fuel tank is disposed farther forward than a position (e.g., a seat position) at which the rider sits, for example. The fuel tank is disposed farther upward than an engine, for example. The straddled vehicle of the present teaching may not always need to have the fuel tank, for example. For example, the straddled vehicle of the present teaching may be a vehicle (electric motorcycle) capable of traveling with a motor driven by electric power.

The "cover" is a member that covers at least a part of the fuel tank. More specifically, the cover is a member that covers at least a part of the lateral side of the fuel tank. The cover has such an appearance that it bulges outward, for example. At least a part of the fuel tank is disposed farther forward than the seat. That is, at least a part of the cover is disposed farther forward than the seat, and disposed at the lateral side portion (outward portion in the left-right direction) of the vehicle.

As the cover, for example, a tank cover disposed to cover the fuel tank may be mentioned. As the cover, for example, a shroud for sending air to a radiator or the like may be mentioned. Thus, the cover may be an exterior part for covering the fuel tank, or may be an exterior part for transporting air. That is, the "cover" as used herein is a part that is arranged so as to overlap at least a part of the lateral side of the fuel tank in a side view, irrespective of whether or not the function of the cover is to cover the fuel tank.

The "dummy tank" is, for example, provided instead of the fuel tank in a straddled vehicle having no fuel tank, such as an electric motorcycle. The dummy tank may be configured such that the inside thereof can be used as an accommodation portion, for example. At least a part of the dummy tank is disposed farther forward than the seat, and at the lateral side portion of the vehicle.

In this manner, both the cover and the dummy tank are at least partially disposed farther forward than the seat and at the lateral side portion of the vehicle, though they are different in functions. Herein, the cover and the dummy tank may be collectively referred to as "cover member," for descriptions. The cover member may be configured such that its portion serving as a rightward portion and its portion serving as a leftward portion are separate members, for example. The cover member may be configured such that its portion serving as a rightward portion and its portion serving as a leftward portion are unified, for example.

The cover member is configured not to interfere with the steering mechanism, for example. For example, the cover member is formed so as to avoid a range of motion of the front fork, which is included in the steering mechanism. The cover member may be configured such that the forward surface portion is farther rearward than the axis of the front fork, for example.

The "forward surface portion" is a portion formed in a forward portion of the cover member (the cover or the dummy tank). The forward surface portion is a portion of the cover member, the portion being visible in a front view, for example. The forward surface portion is a portion of the cover member, which is formed to project outward in the left-right direction, the portion being farther forward than at least the outward end of the cover member, for example. The forward surface portion is not required to be a portion having a planar shape. For example, the forward surface portion may have an opening. For example, the forward surface portion may have a curved shape.

The "flasher" (direction indicator) is disposed at each of the left and right portions of the vehicle. The flasher is capable of blinking indication. More specifically, the flasher is capable of performing blinking indication in which the flasher is repeatedly turned on and off. The flasher is disposed in a forward portion of the vehicle so as to be visible in a front view, for example. The flasher includes at least one light source and an outer lens. The flasher may include an inner lens, for example. The flasher may include a housing, for example.

The straddled vehicle includes left and right flashers (rear flashers) disposed in a rearward portion of the vehicle so as to be visible from the rearward. Herein, the "flasher" means the flasher (front flasher) disposed in the forward portion of the vehicle, unless otherwise stated.

The outer lens of the flasher functions as a light irradiation portion, for example. For example, the outer lens of the flasher is visible from the outside. The outer lens of the flasher may be formed integrally with a housing that accommodates the light source and the like. The outer lens of the flasher may be a member separate from the housing, for example.

Here, the "outer lens of the flasher" means a portion that functions as the irradiation portion, for example. The "outer lens of the flasher" means a portion that is exposed to the outside and is visible from the outside, for example. Thus, the "outer lens of the flasher" as used herein means "flasher irradiation portion," which functions as an irradiation portion through which light of the light source is visible from the outside.

For example, a case is assumed where the outer lens of the flasher constitutes a part of an outer lens member, which is formed integrally with a housing that accommodates the light source and the like, and a portion (e.g., an outer lens portion) of the outer lens member is exposed to the outside while another portion (e.g., a housing portion) of the outer lens member is hidden by another member (e.g., the cover member) and invisible from the outside. In such a case, the "outer lens of the flasher" means a portion (the flasher irradiation portion) through which light of the light source is visible from the outside, and does not include a portion through which light of the light source is invisible from the outside.

For example, a case is assumed where the outer lens of the flasher constitutes a part of an outer lens member, which is formed integrally with a housing that accommodates the light source and the like, and the outer lens member is entirely exposed to the outside, but light of the light source is visible through a portion (e.g., an outer lens portion) of the outer lens member while light of the light source is invisible through another portion (e.g., a housing portion) of the outer lens member. In such a case, the "outer lens of the flasher" means a portion (the flasher irradiation portion) through which light of the light source is visible from the outside, and does not include a portion through which light of the light source is invisible from the outside.

For example, a case is assumed where the outer lens of the flasher is a member separate from the housing, and a portion such as the end of the outer lens is hidden by another member (e.g., the cover member) so that light of the light source is invisible through the portion from the outside. In such a case, the "outer lens of the flasher" means a portion (the flasher irradiation portion) through which light of the light source is visible from the outside, and does not include a portion through which light of the light source is invisible from the outside.

Herein, the outer lens of the flasher, when explained, may be referred to simply as "flasher outer lens" or "flasher irradiation portion." A portion of the flasher that is not exposed to the outside and is invisible may be referred to as "flasher non-irradiation portion."

### [Regarding Position of Flasher]

The flasher is disposed in the forward surface portion of the cover member. In more detail, the flasher is disposed such that, for example, the flasher outer lens is arranged along the forward surface portion of the cover member while the light source is arranged inside the cover member. That is, the flasher of the straddled vehicle of the present teaching is what is called a built-in type, which is disposed as if buried in the cover member. Accordingly, in the straddled vehicle of the present teaching, the headlight is configured to move along with a manipulation of the handlebar while the flasher outer lens does not move together with the headlight when the handlebar is manipulated.

The wording "the outer lens of the flasher being located farther rearward than the axis of the front fork at the handlebar neutral position in a side view" means that the flasher outer lens is arranged in a rearward region, provided that the axis of the front fork at the handlebar neutral position is a boundary line that partitions a forward region, which is a region located forward in a side view, and the rearward region, which is a region located rearward in a side view, from each other, for example. The flasher outer lens may be arranged so as to partially overlap the front fork in a side view.

Next, a position (up-down position) of the flasher outer lens in the up-down direction will be described. Herein, a horizontal plane that passes through the lower end of the headlight outer lens (headlight irradiation portion) may be referred to as "height reference plane" for descriptions. Herein, a range from the upper end to the lower end of the flasher outer lens (flasher irradiation portion) may be referred to as "flasher up-down range" for descriptions.

The wording "the outer lens of the flasher being disposed such that at least a half of its full length in the up-down direction is located farther upward than the lower end of the outer lens of the headlight at the handlebar neutral position" means that, for example, a region corresponding to at least a half of the flasher outer lens (flasher irradiation portion) is arranged farther upward than the height reference plane. The wording "the outer lens of the flasher being disposed such that at least a half of its full length in the up-down direction is located farther upward than the lower end of the outer lens of the headlight at the handlebar neutral position" means that, for example, the flasher outer lens is arranged at about the same up-down position (height) as the headlight outer lens. For example, the flasher outer lens may be arranged so as to be at least partially farther upward than the lower end of the headlight outer lens. The flasher outer lens may be configured such that a half or more of the flasher up-down range is located farther upward than the height reference plane, for example.

The flasher outer lens may be disposed so as to be at least partially located farther upward than the upper end of the lower bracket, for example. The flasher outer lens may be disposed such that at least a half of the flasher up-down range is located farther upward than either the lower end of the outer lens of the headlight or the upper end of the lower bracket at the handlebar neutral position, for example. For example, the flasher outer lens may be disposed such that the flasher up-down range is entirely located farther upward than either the lower end of the headlight outer lens or the upper end of the lower bracket at the handlebar neutral position.

The up-down position of the flasher outer lens can be selected as appropriate. For example, it is preferred that the up-down position of the flasher outer lens is at a position of 350 to 1200 millimeters upward from the ground.

### [Regarding Shape of Flasher Outer Lens]

Next, the shape of the flasher outer lens of the straddled vehicle of the present teaching will be described. In the straddled vehicle of the present teaching, the flasher outer lens has a horizontally elongated shape in a front view of the flasher outer lens.

The "horizontally elongated shape" means that the full length in the horizontal direction (lateral direction) is larger than the full length in the up-down direction. More specifically, the horizontally elongated shape means that the horizontal full length, which is from the left end to the right end, is larger than the up-down full length, which is from the upper end to the lower end.

The "front view of the outer lens of the flasher" refers to when the flasher outer lens is viewed in a direction perpendicular to a vertical plane passing through an imaginary line that connects the inward end and the outward end of the flasher outer lens arranged in the vehicle to each other, for example. Herein, the direction perpendicular to the vertical plane passing through the imaginary line that connects the inward end and the outward end of the flasher outer lens to each other may be referred to as "direction corresponding to the lens front view" for descriptions.

The wording "the outer lens of the flasher has a horizontally elongated shape in a front view of the outer lens of the flasher" means having a horizontally elongated shape when the flasher outer lens arranged in the vehicle is viewed in the direction corresponding to the lens front view, for example. The wording "the outer lens of the flasher has a horizontally elongated shape in a front view of the outer lens of the flasher" means having a horizontally elongated shape when the flasher outer lens is viewed in such a direction as to face the flasher outer lens, for example. The wording "the outer lens of the flasher has a horizontally elongated shape in a front view of the outer lens of the flasher" means that the flasher outer lens has its horizontal full length, which is from the inward end to the outward end thereof, larger than its up-down full length, which is from the upper end to the lower end thereof, when viewed in the direction corresponding to the lens front view, for example. Accordingly, there may be a case where the flasher outer lens has a vertically elongated shape, instead of a horizontally elongated shape, in a front view of the vehicle or in a side view of the vehicle, even though it has a horizontally elongated shape when viewed in the direction corresponding to the lens front view.

Here, the flasher outer lens may have an inclined shape in a front view of the vehicle or when viewed in the direction corresponding to the lens front view. For example, the flasher outer lens may be configured such that its inward lower end and its outward lower end are at different up-down positions (heights), and such that its downward side and/or its upward side is/are inclined when viewed in the direction corresponding to the lens front view (so as to have a shape that looks inclined in a front view of the vehicle). For example, the flasher outer lens may be configured such that its inward end and its outward end are at different positions in the forward-rearward direction, and so as to have a shape that is inclined from the forward to the rearward. The flasher outer lens may have either a flat surface or a curved surface.

### [Regarding Optical Method of Flasher, and Attachment Structure]

Next, an optical method of the flasher, and an attachment structure in the straddled vehicle of the present teaching will be described.

The inner lens includes a light incident surface that allows light of the light source to enter the inside of the inner lens, for example. The inner lens includes a total reflection surface that allows light having entered the inside of the inner lens to be totally reflected, for example. The inner lens includes a light exit surface that allows light to exit from the inside to the outside of the inner lens, for example. Light of the light source is incident on the light incident surface along an optical axis, for example. Light having entered through the light incident surface exits from the light exit surface.

The "inward end portion of the inner lens in the vehicle width direction" is an end portion (a left end portion or a right end portion) of the inner lens in the left-right direction, for example. The inward end portion of the inner lens is an inward end portion of the inner lens in the vehicle width direction, for example. For example, in a case of an inner lens of the flasher disposed leftward, the inward end portion of the inner lens in the vehicle width direction is a right end portion of the inner lens. For example, in a case of an inner lens of the flasher disposed rightward, the inward end portion of the inner lens in the vehicle width direction is a left end portion of the inner lens. The straddled vehicle of the present teaching may have left and right flashers each having an inner lens that is configured such that light from the light source enters the inside of the inner lens through an inward end portion of the inner lens in the vehicle width direction, for example. To be specific, for example, a configuration may be adoptable in which light enters the inner lens of the left flasher through a right end portion of the inner lens, while light enters the inner lens of the right flasher through a left end portion of the inner lens. Alternatively, the straddled vehicle of the present teaching may have left and right flashers each having an inner lens that is configured such that light from the light source enters the inside of the inner lens through an outward end portion of the inner lens, for example. To be specific, for incident, a configuration may be adoptable in which light enters the inner lens of the left flasher through a left end portion of the inner lens, while light enters the inner lens of the right flasher through a right end portion of the inner lens, for example.

The wording "the inner lens is configured such that light from the light source enters inside of the inner lens through an inward end portion of the inner lens in vehicle width direction, and light incident on the inner lens exits to forward of the vehicle" means that the flasher is configured such that light having entered inside of the inner lens through either a left end portion or a right end portion of the inner lens is reflected inside the inner lens so as to spread in the left-right direction, and then exits to the outside of the inner lens, for example.

In the straddled vehicle of the present teaching, the inner lens may have two or more total reflection surfaces, for example. For example, a configuration may be acceptable in which the inner lens has a first total reflection surface and a second total reflection surface, the first total reflection surface totally reflects light to the second total reflection surface, and the second total reflection surface totally reflects light to the forward. This configuration allows light emitted from a single light source to spread in the left-right direction of the vehicle on the first total reflection surface, and reach the second total reflection surface so as to spread throughout the entire area of the second total reflection surface in the left-right direction. Thus, light of the single light source is able to exit to the forward while diffusing in the left-right direction.

The number of light sources for each inner lens may be one or more. For example, it may be conceivable that one light source is provided for one inner lens, and a light incident surface is disposed in a left end portion or a right end portion of the inner lens. A configuration in which one light source is provided for one inner lens such that light enters the inside of the inner lens through either the left or right end portion of the inner lens, and a total reflection surface is formed approximately throughout a rearward portion of the inner lens allows light emitted from a single light source to exit while spreading in the left-right direction.

The wording "the inner lens has an attachment portion, the attachment portion being disposed in at least either an upward portion or a downward portion of the inner lens" means that the inner lens is attached to an attachment object member in the upward portion and/or the downward portion. For example, the inner lens may have attachment portions disposed both in the upward portion and in the downward portion. For example, the inner lens may be attached to an attachment object member only in the upward portion or only in the downward portion. That is, the inner lens may be supported on the attachment object member such that the upward portion or the downward portion is cantilevered. An object to which the inner lens is attached is not limited. The inner lens may be attached to a housing or a substrate of the flasher, or to the cover member, for example.

Here, a substrate on which the light source is disposed may have a resistance element, which serves as a heat source. The attachment portion is preferably disposed so as to avoid a place immediately over the resistance element, for example. Such a configuration can suppress application of heat of the resistance element to the attachment portion.

### [Regarding Visibility of Flasher Outer Lens Viewed from Specific Position]

Next, the visibility of the flasher outer lens when viewed from a specific position in a case of the handlebar neutral position and in a case of the maximum displacement position will be respectively described. Herein, regarding a direction of rotation on a horizontal plane relative to a vertical plane that passes through the flasher center and extends in parallel to an advancing direction (forward-rearward direction) of the vehicle, a direction toward the central vertical cross-section may be referred to as "inward direction," and a direction away from the central vertical cross-section may be referred to as "outward direction."

Here, for vehicle flashers, technical standards may be set by a country and/or public organizations in accordance with classifications and specifications of vehicles. For example, a flasher of a two-wheeled vehicle may be, as its technical standards, required to be visible in a range (inner viewing angle) enclosed by a vertical plane passing through the flasher center and extending in parallel to the advancing direction (forward-rearward direction) of the vehicle and a plane having a specific angle inward of the flasher. For example, a flasher of a two-wheeled vehicle may be, as its technical standards, required to be visible in a range (outer viewing angle) enclosed by a vertical plane passing through the flasher center and extending in parallel to the advancing direction (forward-rearward direction) of the vehicle and a plane having a predetermined angle outward of the flasher.

The "flasher center" as used herein is a position at which the flasher outer lens (flasher irradiation portion) has the highest luminous intensity, for example. The "flasher center" is a position through which, in light emitted from the light source, the most intense light (optical axis light) passes, for example. The "flasher center" is a position that locates halfway between the left end and the right end of the flasher outer lens and halfway between the upper end and the lower end of the flasher outer lens, for example. Herein, an axis that passes through the flasher center, is horizontal, and extends in parallel to the central vertical cross-section may be referred to as "flasher reference axis," for descriptions. That is, while the flasher is attached to the vehicle, the flasher reference axis is an axis that is a horizontal line passing through the flasher center and is parallel to the vehicle center line. Herein, a vertical plane that includes the flasher reference axis and extends in parallel to the central vertical cross-section may be referred to as "flasher reference plane," for descriptions. Herein, a horizontal plane including the flasher center may be referred to as "viewing reference plane," for descriptions.

The "specific angle" refers to an angle from which the flasher is required to be visible, for example. The specific angle is an angle that is predetermined in accordance with specifications of the vehicle, for example. The specific angle is an angle inward of the flasher reference plane, starting from the flasher center, for example. In one example case, in a vehicle having certain specifications, the specific angle is predetermined as 15 degrees inward from the flasher reference plane, for example.

The "specific position" is a position at which the specific angle is formed. The specific position is a position on the horizontal plane (viewing reference plane) including the flasher center, and is a position at which the specific angle is formed relative to the flasher reference plane, for example.

Herein, a vertical plane that forms the specific angle relative to the flasher reference plane on the viewing reference plane may be referred to as "specific angle imaginary plane," for descriptions. Herein, a range enclosed by the flasher reference plane and the specific angle imaginary plane may be referred to as "inner viewing angle," for descriptions.

Herein, a plane that has a contact point with the headlight on the viewing reference plane and that is parallel to the specific angle imaginary plane may be referred to as "viewing boundary plane," for descriptions. In other words, the viewing boundary plane can be considered as an imaginary plane that serves as a partition by which whether or not a viewing object (e.g., the flasher outer lens) on the viewing reference plane is hidden by the headlight when viewed from the specific position is determined, for example.

Herein, with the viewing boundary plane serving as a boundary, a region farther outward than the viewing boundary plane may be referred to as "outward region," and a region farther inward than the viewing boundary plane may be referred to as "inward region," for descriptions. In other words, the outward region can be considered as a region in which a viewing object (e.g., the flasher outer lens) on the viewing reference plane is visible without being hidden by the headlight when viewed from the specific position, for example. The inward region can be considered as a region in which a viewing object (e.g., the flasher outer lens) on the viewing reference plane is hidden by the headlight and thus invisible when viewed from the specific position, for example.

In a case of the handlebar neutral position, the flasher outer lens is at least partially visible when viewed from the specific position. In other words, in a case of the handlebar neutral position, the flasher outer lens is at least partially visible from the inner viewing angle, for example. In more detail, for example, in a case of the handlebar neutral position, the flasher outer lens is entirely or partially located farther outward than the viewing boundary plane (located in the outward region). Accordingly, in a case of the handlebar neutral position, the flasher outer lens is entirely or partially visible when viewed from the specific position.

The wording "the outer lens of the flasher is configured to be at least partially visible from a specific position in a case where the steering mechanism is at a maximum displacement position" means that the flasher outer lens is partially or entirely visible when viewed from the specific position in a case of the maximum displacement position, for example. In other words, in a case of the maximum displacement position, the flasher outer lens is partially or entirely visible from the inner viewing angle, for example.

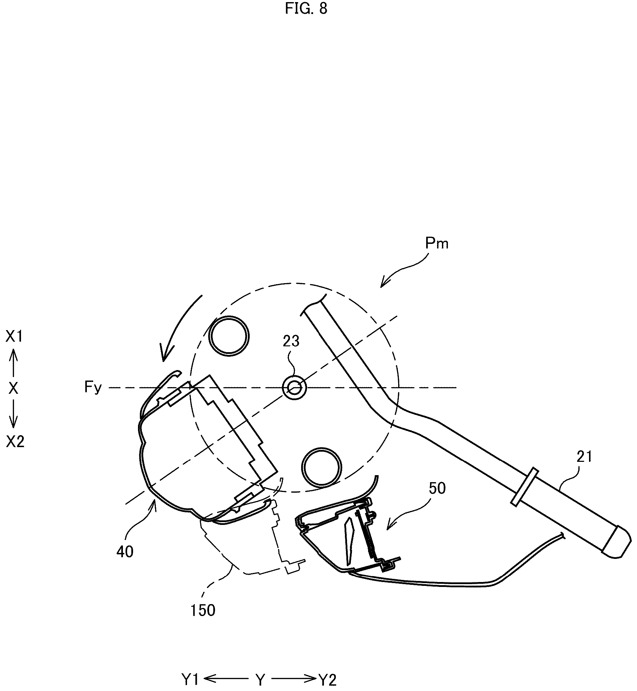

Here, for example, a configuration in which a horizontally elongated outer lens is provided as a built-in type disposed farther rearward than the axis of the front fork makes it possible to suppress an interference of the flasher with another member (e.g., the headlight) when the steering mechanism is at the maximum displacement position (see FIG. 8), to provide a good visibility of the flasher, and furthermore to suppress a size increase of the cover or the dummy tank in the vehicle width direction in a front view.

The wording "partially visible" means that a portion of the flasher outer lens is visible while the rest portion of the flasher outer lens is hidden by the headlight and is invisible when the flasher outer lens is viewed from the specific position in a case of the maximum displacement position, for example. The wording "partially visible" means that a portion of the flasher outer lens is located farther outward than the viewing boundary plane (located in the outward region) while the rest portion of the flasher outer lens is located farther inward than the viewing boundary plane (located in the inward region) in a case of the maximum displacement position, for example.

The wording "entirely visible" means that the entirety of the flasher outer lens is visible when the flasher outer lens is viewed from the specific position in a case of the maximum displacement position, for example. The wording "entirely visible" means that the entirety of the flasher outer lens is located farther outward than the viewing boundary plane (located in the outward region) in a case of the maximum displacement position, for example.

These and other objects, features, aspects, and advantages of the present teaching will become more apparent from the following detailed description of embodiment(s) of the present teaching, with reference to the accompanying drawings. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by the drawings or descriptions provided below.

### Advantageous Effects of Invention

The present teaching aims to provide a straddled vehicle including a steering mechanism configured by a front fork, which supports a front wheel, being coupled to a steering shaft via a lower bracket and an upper bracket, and the steering shaft being coupled to a handlebar so that the steering mechanism is capable of being rotationally moved by a manipulation on the handlebar, the straddled vehicle being capable of providing a visibility of a flasher from an inner viewing angle, and also capable of suppressing a size increase of a peripheral part of a headlight, while improving the degree of freedom in designing a layout of the flasher so as to suppress a size increase of a dummy tank or a cover, which covers at least a part of a lateral side of a fuel tank in a side view, in vehicle width direction in a front view.

### Brief Description of Drawings

[FIG. 1] (a) is a left side view of a straddled vehicle according to an embodiment of the present teaching; (b) is a front view of the straddled vehicle shown in FIG. 1(a); (c) shows a principal part of FIG. 1(b) on an enlarged scale; and (d) schematically shows a flasher outer lens as viewed in direction corresponding to the lens front view.
[FIG. 2] (a) is a front view showing the flasher outer lens disposed in a rightward portion of the straddled vehicle shown in FIG. 1; and (b) shows a cross-section as taken along the line A1-A1 of FIG. 2(a).
[FIG. 3] (a) is a perspective view showing a structure of attachment of the flasher outer lens in the straddled vehicle shown in FIG. 1; and (b) shows a cross-section as taken along the line A2-A2 of FIG. 2(a).
[FIG. 4] Cross-sectional views showing the positions of a steering mechanism and the flasher outer lens of the straddled vehicle shown in FIG. 1, in which (a) illustrates a case of a handlebar neutral position, and (b) illustrates a case of a maximum displacement position
[FIG. 5] A diagram showing a principal part of FIG. 4 on an enlarged scale, in which (a) illustrates a case of the handlebar neutral position, and (b) illustrates a case of the maximum displacement position
[FIG. 6] Cross-sectional views showing the positions of a steering mechanism and a flasher outer lens of a straddled vehicle according to a variation of the straddled vehicle shown in FIG. 1, in which (a) illustrates a case of the handlebar neutral position, and (b) illustrates a case of the maximum displacement position
[FIG. 7] A diagram showing the position of a control unit of the straddled vehicle shown in FIG. 1, in which (a) is a side view, (b) is a schematic plan view, and (c) is a schematic diagram showing the positions of cables on the line A3-A3 of FIG. 7(a)
[FIG. 8] A reference diagram showing a case where a flasher is located farther forward than the axis of a front fork

### Description of Embodiments

In the following, details of a straddled vehicle 1 according to an embodiment of the present teaching will be described with reference to the drawings. Here, it should be noted that the embodiment described below is merely an example. The present teaching should not be construed as being limited in any way by the embodiment described below.

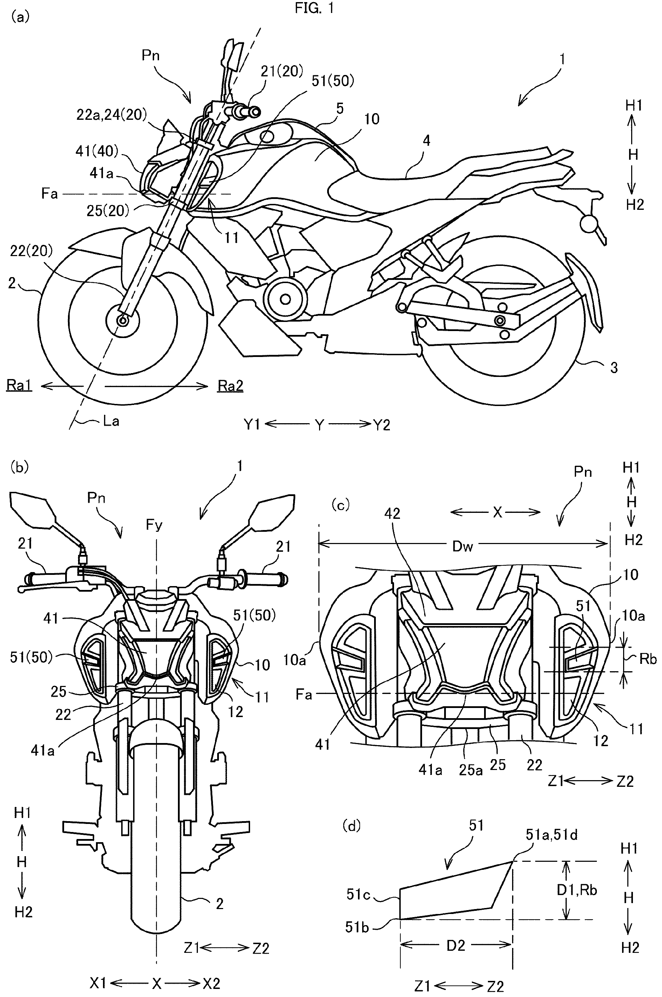

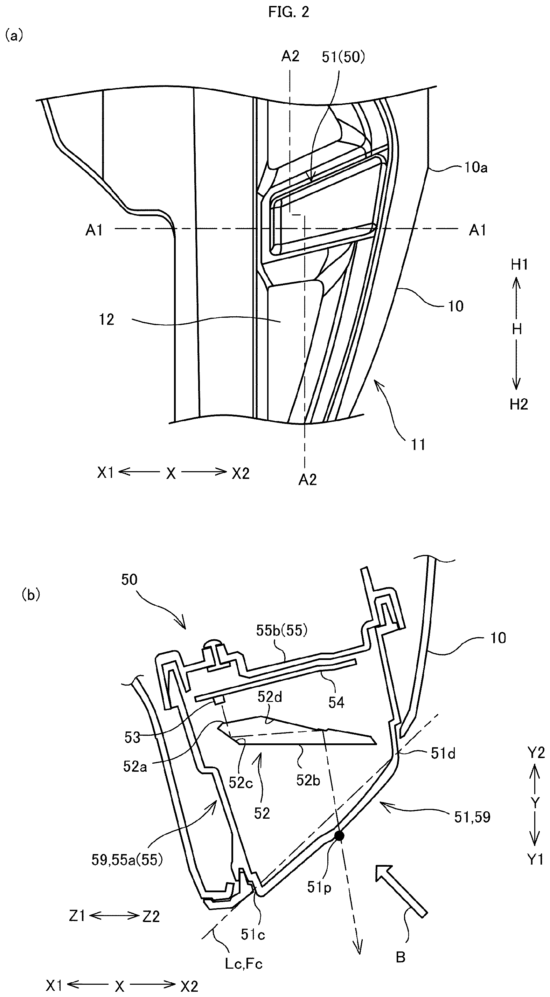

FIG. 1(a) is a left side view of the straddled vehicle 1 according to the embodiment of the present teaching. FIG. 1(b) is a front view of the straddled vehicle 1. FIG. 1(c) shows a principal part of FIG. 1(b) on an enlarged scale. FIG. 1(d) schematically shows a flasher outer lens 51 as viewed in direction corresponding to the lens front view B (see FIG. 2(b)). In FIG. 1, a case of a handlebar neutral position Pn is illustrated.

As shown in FIG. 1(a), the straddled vehicle 1 includes a front wheel 2, a rear wheel 3, a seat 4, a fuel tank 5, a cover 10, a steering mechanism 20, a headlight 40, and a flasher 50.

As shown in FIG. 1(a), the front wheel 2 is disposed in a forward portion of the straddled vehicle 1, and the rear wheel 3 is disposed in a rearward portion of the straddled vehicle 1. The fuel tank 5 is at least partially disposed farther forward Y1 than the seat 4.

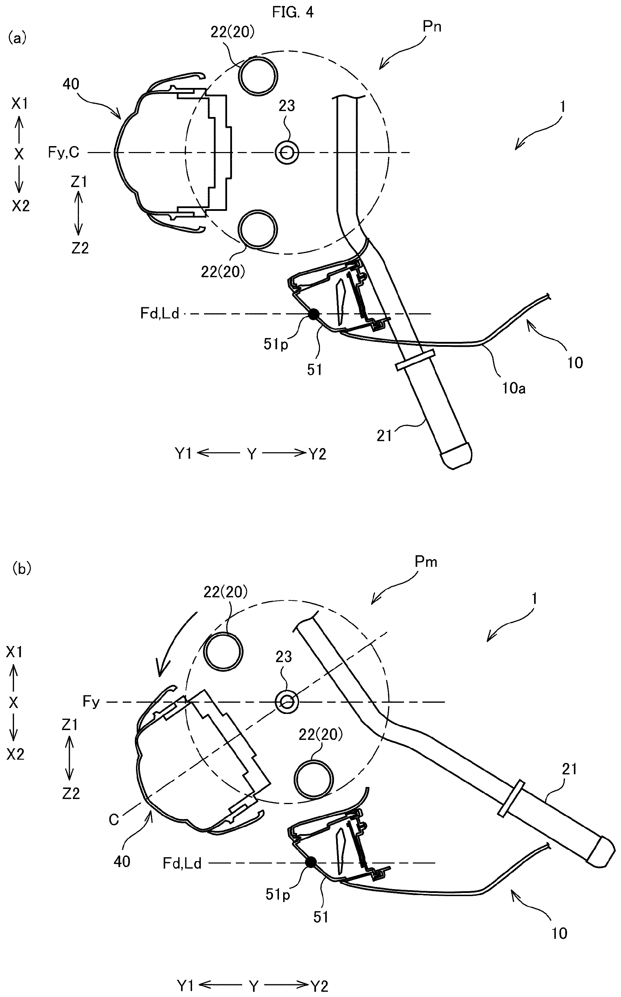

As shown in FIG. 1(a), the steering mechanism 20 includes a handlebar 21, a front fork 22, a steering shaft 23 (see FIG. 4), an upper bracket 24, and a lower bracket 25. The steering mechanism 20 is supported by a vehicle body frame (not shown) via a headpipe (not shown). The steering mechanism 20 is configured to be capable of displacement from the handlebar neutral position Pn due to a manipulation on the handlebar 21. The handlebar neutral position Pn is a position for the vehicle to travel straight (see FIG. 4).

The handlebar 21 is capable of manipulation by a rider. The handlebar 21 is coupled to the steering shaft 23. The steering shaft 23 is received through the headpipe, and is supported by the vehicle body frame so as to be rotatable about the central axis. The front fork 22 supports the front wheel 2. The front fork 22 comprises a pair of front forks 22 disposed left and right of the front wheel 2, respectively. The left and right front forks 22 are coupled by the upper bracket 24 and the lower bracket 25. The upper bracket 24 and the lower bracket 25 are members extending left and right. The upper bracket 24 couples upper end portions 22a of the left and right front forks 22. The lower bracket 25 couples left and right front forks 22, at a location downward H2 of the headpipe. The front fork 22 extending from the vicinity of an axle of the front wheel 2 reaches the height (up-down position) at which the headlight 40 is disposed.

The headlight 40 includes a headlight outer lens 41. The headlight 40 includes a light source (not shown) and a headlight housing 42 (see FIG. 1(c)). The headlight 40 is attached to the steering mechanism 20. More specifically, in the straddled vehicle 1 of this embodiment, the headlight 40 is attached to the upper bracket 24 and the lower bracket 25. Accordingly, the headlight 40 is configured to rotationally move along with the steering mechanism 20.

As shown in FIG. 1(a), at least a part of the headlight outer lens 41 is arranged between the lower bracket 25 and the upper bracket 24. More specifically, as shown in FIG. 1(a), in the straddled vehicle 1 of this embodiment, the headlight outer lens 41 is arranged such that it is entirely placed farther upward H1 than the lower bracket 25 and farther downward H2 than the upper bracket 24.

The cover 10 is a member that covers at least a part of a lateral side of the fuel tank 5 in a side view. As shown in FIG. 1(a), the cover 10 is arranged so as to overlap at least a part of the lateral side of the fuel tank 5 in a side view. In the straddled vehicle 1 of this embodiment, the cover 10 is composed of left and right members disposed left and right, respectively, the left and right members being separate from each other. As shown in FIG. 1(c), the cover 10 is shaped so as to project outward Z2.

As shown in FIG. 1(c), a forward portion of the cover 10 has a forward surface portion 11. As shown in FIG. 1(c), the forward surface portion 11 is a part of the cover 10 that is visible in a front view of the vehicle. The forward surface portion 11 is a portion located farther forward Y1 than the outward ends 10a (see FIG. 4(a)). The forward surface portion 11 has an opening 12.

The flasher 50 is capable of blinking indication. As shown in FIG. 1(b), the flasher 50 comprises flashers 50 disposed in leftward and rightward portions of the straddled vehicle 1, respectively.

As shown in FIG. 2(b), in the straddled vehicle 1 of this embodiment, the flasher 50 includes the flasher outer lens 51, an inner lens 52, a light source 53, a substrate 54, and a housing 55.

As shown in FIG. 2(b), in the straddled vehicle 1 of this embodiment, the housing 55 is composed of a housing component 55a and a closure member 55b. In the straddled vehicle 1 of this embodiment, the housing component 55a is provided as a part of the outer lens member 59. In the straddled vehicle 1 of this embodiment, the flasher outer lens 51 is provided as a part of the outer lens member 59. From another perspective, in the straddled vehicle 1 of this embodiment, the flasher outer lens 51 and the housing component 55a are provided as a single member (outer lens member 59). That is, in the flasher 50 of the straddled vehicle 1 of this embodiment, the flasher outer lens 51 and a part (housing component 55a) of the housing 55 are formed as one piece. The housing component 55a has a hollow shape capable of accommodating the inner lens 52. The inner lens 52, the substrate 54, and the like are received inside the housing component 55a. The housing component 55a, with the inner lens 52 and the like received inside, is closed by the closure member 55b. In addition, the inner lens 52, the light source 53, and the substrate 54 are received inside the housing 55.

As shown in FIG. 2(a), the flasher outer lens 51 is disposed in the forward surface portion 11. More specifically, in the straddled vehicle 1 of this embodiment, the flasher outer lens 51 is arranged in the opening 12 of the forward surface portion 11. As mentioned above, the flasher 50 is configured to have the inner lens 52, the light source 53, and the substrate 54 received in the housing 55. Moreover, the housing 55 is received inside the cover 10. Thus, the flasher 50 of the straddled vehicle 1 is what is called a built-in type, which is disposed as if buried in the cover 10 (vehicle body). The flasher outer lens 51 is disposed in the forward surface portion 11 of the cover 10 such that the flasher outer lens 51 does not move together with the headlight 40 as the handlebar 21 is manipulated.

### [Arrangement of Flasher]

The position of the flasher outer lens 51 will now be described. The "height reference plane Fa" refers to a horizontal plane passing through the lower end 41a of the headlight outer lens 41 (see FIG. 1(c)). The "flasher up-down range Rb" refers to a range extending from the upper end 51a to the lower end 51b of the flasher outer lens 51 (see FIG. 1(d)). The "up-down full length D1" refers to the full length of the flasher outer lens 51 in up-down direction H, which is the length from the upper end 51a to the lower end 51b of the flasher outer lens 51. The "horizontal full length D2" refers to the length from the inward end 51c (in FIG. 1(d), the left end) to the outward end 51d (in FIG. 1(d), the right end) (see FIG. 1(d)).

As shown in FIG. 1(a), the flasher outer lens 51 is located farther rearward Y2 than the axis La of the front fork 22 at the handlebar neutral position Pn in a side view. In other words, in the straddled vehicle 1 of this embodiment, the flasher outer lens 51 is arranged in a rearward region Ra2, provided that the axis La of the front fork 22 at the handlebar neutral position Pn is a boundary line that partitions a forward region Ra1 and the rearward region Ra2 from each other in a side view.

As shown in FIG. 1(c), the flasher outer lens 51 is disposed such that at least a half of its full length (up-down full length D1) in the up-down direction H is located farther upward H1 than the lower end 41a of the headlight outer lens 41 at the handlebar neutral position Pn. In more detail, in the straddled vehicle 1 of this embodiment, the entire range of the flasher up-down range Rb of the flasher outer lens 51 is located farther upward H1 than the height reference plane Fa. Furthermore, as shown in FIG. 1(c), the entire range of the flasher up-down range Rb of the flasher outer lens 51 is located farther upward H1 than the lower end 25a of the lower bracket 25.

As shown in FIG. 1(d), the flasher outer lens 51 has a horizontally elongated shape so that its full length (horizontal full length D2) in the horizontal direction (lateral direction) is larger than its full length (up-down full length D1) in the up-down direction H in a front view of the flasher outer lens 51. Here, the direction corresponding to the lens front view B refers to a direction perpendicular to a vertical plane Fc passing through an imaginary line Lc that connects the inward end 51c and the outward end 51d of the flasher outer lens 51 to each other (see FIG. 2(b)). In more detail, as shown in FIG. 1(d), the flasher outer lens 51 has a horizontally elongated shape with the horizontal full length D2 larger than the up-down full length D1, when the flasher outer lens 51 is viewed in the direction corresponding to the lens front view B (in a front view of the flasher outer lens 51).

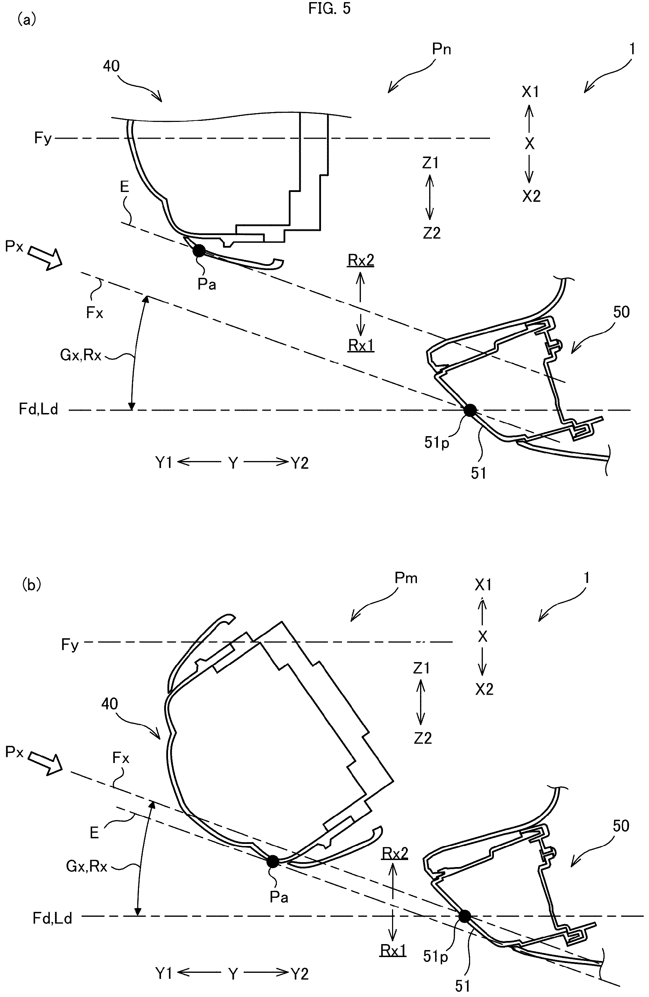

With this configuration, the straddled vehicle 1 is capable of downsizing a peripheral part of the headlight, as compared to a headlight having a flasher of a semaphore type. Therefore, in the straddled vehicle 1, in which the steering mechanism 20 including the front fork 22, the lower bracket 25, and the upper bracket 24 is rotationally moved by a manipulation on the handlebar 21, the flasher outer lens 51 is able to be arranged in a portion of the forward surface portion 11 of the cover 10, the portion being farther rearward Y2 than the axis La of the front fork 22, and in addition a half or more of the up-down full length D1 of the flasher outer lens 51 is able to be arranged farther upward H1 than the lower end 41a of the headlight outer lens 41. Moreover, due to the horizontally elongated shape of the flasher outer lens 51, it is possible to improve the degree of freedom in designing a layout of the flasher 50 such that at least a part (e.g., an outward end portion in the vehicle width direction) of the flasher outer lens 51 is visible when the flasher 50 is viewed from an inner viewing angle Rx (see FIG. 5(a)). Thus, it is possible to increase the viewability of the flasher outer lens 51 while suppressing the size (cover vehicle width size Dw) of the cover 10 in the vehicle width direction in a front view. Accordingly, it is possible to provide a visibility of the flasher 50 from the inner viewing angle Rx while suppressing an increase in the size of the cover 10 in the vehicle width direction in a front view.

### [Regarding Optical Method of Flasher, and Attachment Structure]

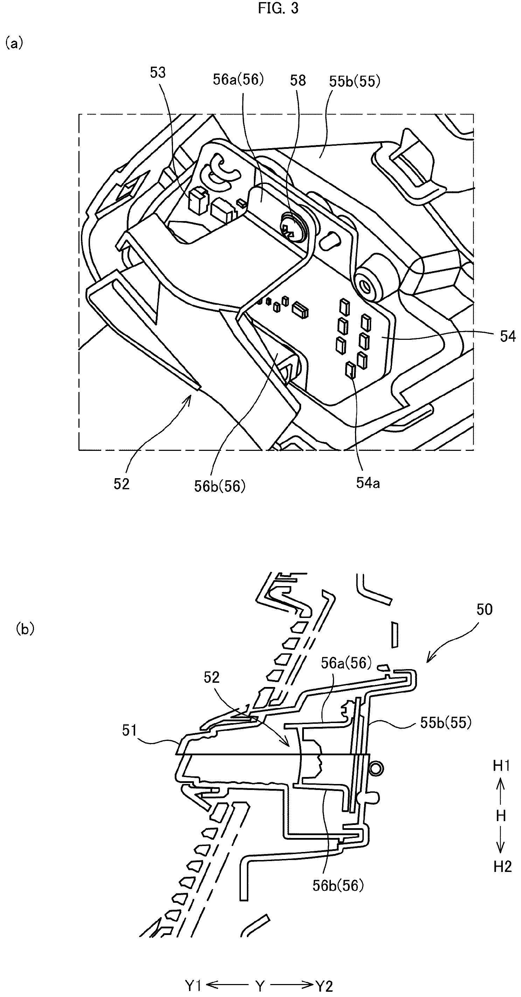

An optical method of the flasher 50, and an attachment structure will now be described with reference to FIG. 2 and FIG. 3. FIG. 2(a) is a front view showing the flasher outer lens 51 disposed in the rightward portion of the straddled vehicle 1. FIG. 2(b) shows a cross-section as taken along the line A1-A1 of FIG. 2(a). FIG. 3(a) is a perspective view showing a structure of attachment of the inner lens 52. FIG. 3(b) shows a cross-section as taken along the line A2-A2 of FIG. 2(a).

As shown in FIG. 2(b), the inner lens 52 includes a light incident surface 52a, a light exit surface 52b, and total reflection surfaces 52c, 52d. The light incident surface 52a allows light of the light source 53 to enter the inside of the inner lens 52. The light exit surface 52b allows light to exit from the inside to the outside of the inner lens 52. The total reflection surfaces 52c, 52d allow light to be totally reflected inside the inner lens 52. More specifically, the total reflection surface 52c (first total reflection surface) allows light having entered the inside of the inner lens 52 through the light incident surface 52a to be totally reflected toward the total reflection surface 52d. The total reflection surface 52d allows light having been reflected by the total reflection surface 52c to be totally reflected to the forward Y1.

As shown in FIG. 2(b), the light source 53 is disposed on the substrate 54. The light source 53 is arranged near the end portion at the inward Z1 (an inward end portion in the vehicle width direction) of the inner lens 52. Therefore, light coming from the light source 53 and incident on the inner lens 52 enters the inside of the inner lens 52 through the inward end portion of the inner lens 52. The light incident on the inner lens 52 exits to the forward Y1.

In more detail, as shown in FIG. 2(b), light of the light source 53 is incident on the light incident surface 52a along the optical axis. The light incident on the light incident surface 52a is totally reflected by the total reflection surface 52c, to reach the total reflection surface 52d, and furthermore is totally reflected by the total reflection surface 52d, to exit to the forward Y1. Here, the light incident on the inner lens 52 is totally reflected by the total reflection surface 52c, to reach the total reflection surface 52d so as to spread throughout the total reflection surface 52d in left-right direction X. Thus, in the flasher 50 of the straddled vehicle 1 of this embodiment, light of the single light source 53 is able to exit to the forward Y1 while diffusing in the left-right direction X.

A structure of attachment of the flasher 50 will now be described with reference to FIG. 3. As shown in FIG. 3(a) and FIG. 3(b), the inner lens 52 has, in its upward portion and downward portion, attachment portions 56. More specifically, the inner lens 52 has an upward attachment portion 56a and a downward attachment portion 56b. The attachment portions 56 of the inner lens 52, which are disposed in its upward portion and downward portion, respectively, are attached to the housing 55 (closure member 55b) via bolts 58. In other words, the inner lens 52 is attached to an attachment object member (in this embodiment, the closure member 55b of the housing 55), at both of locations upward H1 and downward H2 of the inner lens 52. As shown in FIG. 3(a), the substrate 54 has a resistance element 54a. In the straddled vehicle 1 of this embodiment, the attachment portions 56 are disposed so as to avoid a place immediately over the resistance element 54a.

### [Regarding Visibility of Flasher Outer Lens Viewed from Specific Position]

Next, the visibility of the flasher outer lens 51 when viewed from a specific position Px in a case of the handlebar neutral position Pn and in a case of a maximum displacement position Pm will be respectively described with reference to FIG. 4 and FIG. 5.

FIG. 4(a) is a cross-sectional view showing the positions of the steering mechanism 20 and the flasher outer lens 51 in the case of the handlebar neutral position Pn. FIG. 4(b) is a cross-sectional view showing the positions of the steering mechanism 20 and the flasher outer lens 51 in the case of the maximum displacement position Pm. FIG. 5(a) shows a principal part of FIG. 4(a) on an enlarged scale. FIG. 5(b) shows a principal part of FIG. 4(b) on an enlarged scale. In FIG. 4 and FIG. 5, cross-sections of a horizontal plane (viewing reference plane) including a flasher center 51p are shown.

As mentioned above, the steering mechanism 20 is capable of displacing about the steering shaft 23. To be specific, as shown in FIG. 4(a), in the case of the handlebar neutral position Pn, the left and right front forks 22 are arranged at positions that are roughly line-symmetrical with respect to a central vertical cross-section Fy. In the case of the handlebar neutral position Pn, the headlight 40 takes a posture in which a headlight center line C is along the central vertical cross-section Fy. As shown in FIG. 4(b), if the handlebar 21 is manipulated into reverse rotation up to the maximum displacement position Pm, the headlight 40 is displaced to get closer to the flasher outer lens 51.

Here, the "flasher center 51p" refers to a position in the flasher 50 at which the flasher outer lens 51 has the highest luminous intensity. As shown in FIG. 2(b), in the straddled vehicle 1, the flasher center 51p is approximately the center of the flasher outer lens 51 in the left-right direction X. As shown in FIG. 4(a), a flasher reference axis Ld is an axis that passes through the flasher center 51p and that is parallel to the central vertical cross-section Fy. A "flasher reference plane Fd" is a vertical plane that includes the flasher reference axis Ld and that is parallel to the central vertical cross-section Fy.

A "specific angle Gx" refers to an angle in which the flasher outer lens 51 is required to be visible. In the straddled vehicle 1 of this embodiment, starting from the flasher center 51p, an angle of 20 degrees inward relative to the flasher reference plane Fd is defined as the specific angle Gx. A "specific angle imaginary plane Fx" refers to a plane that forms the specific angle Gx relative to the flasher reference plane Fd on the viewing reference plane (horizontal plane including the flasher center 51p). The "inner viewing angle Rx" refers to a range enclosed by the flasher reference plane Fd and the specific angle imaginary plane Fx. The "specific position Px" refers to a position on the horizontal plane (viewing reference plane) including the flasher center 51p, the position forming the specific angle Gx relative to the flasher reference plane Fd.

A "viewing boundary plane E" refers to a plane that has a contact point Pa with the headlight 40 on the viewing reference plane and that is parallel to the specific angle imaginary plane Fx. An "outward region Rx1" refers to a region farther outward Z2 than the viewing boundary plane E, where the viewing boundary plane E serves as a boundary. An "inward region Rx2" refers to a region farther inward Z1 than the viewing boundary plane E, where the viewing boundary plane E serves as a boundary.

As shown in FIG. 5(a), the flasher outer lens 51 is at least partially visible from the specific position Px, when the steering mechanism 20 is at the handlebar neutral position Pn. In more detail, as shown in FIG. 5(a), in the straddled vehicle 1 of this embodiment, in the case of the handlebar neutral position Pn, the entirety of the flasher outer lens 51 is located farther outward Z2 than the viewing boundary plane E (located in the outward region Rx1). Thus, when the flasher outer lens 51 is viewed from the specific position Px in the case of the handlebar neutral position Pn, the entirety of the flasher outer lens 51 is visible without being hidden by the headlight 40.

As shown in FIG. 5(b), the flasher outer lens 51 is configured to be at least partially visible from the specific position Px in the case where the steering mechanism 20 is at the maximum displacement position Pm. In more detail, as shown in FIG. 5(b), in the case of the maximum displacement position Pm, a part of the flasher outer lens 51 is located farther outward Z2 than the viewing boundary plane E (located in the outward region Rx1), and the rest is located farther inward Z1 than the viewing boundary plane E (located in the inward region Rx2). Thus, when the flasher outer lens 51 is viewed from the specific position Px in the case of the maximum displacement position Pm, a part (an end portion at the outward Y2) of the flasher outer lens 51 is visible without being hidden by the headlight 40, and the rest of the flasher outer lens 51 is hidden by the headlight 40 and thus is invisible.

Here, for example, if the flasher 150 is located farther forward Y1 than the axis La of the front fork 22, like a flasher 150 illustrated with an imaginary line in the reference diagram shown in FIG. 8, there is a risk of the flasher 150 interfering with the headlight 40 in the case of the maximum displacement position Pm. In the straddled vehicle 1, on the other hand, the flasher 50 is arranged farther rearward Y2 than the axis La of the front fork 22, which makes it possible to suppress an interference of the flasher 50 with the headlight 40 even in the case where the steering mechanism 20 is at the maximum displacement position Pm.

### [Regarding Variations]

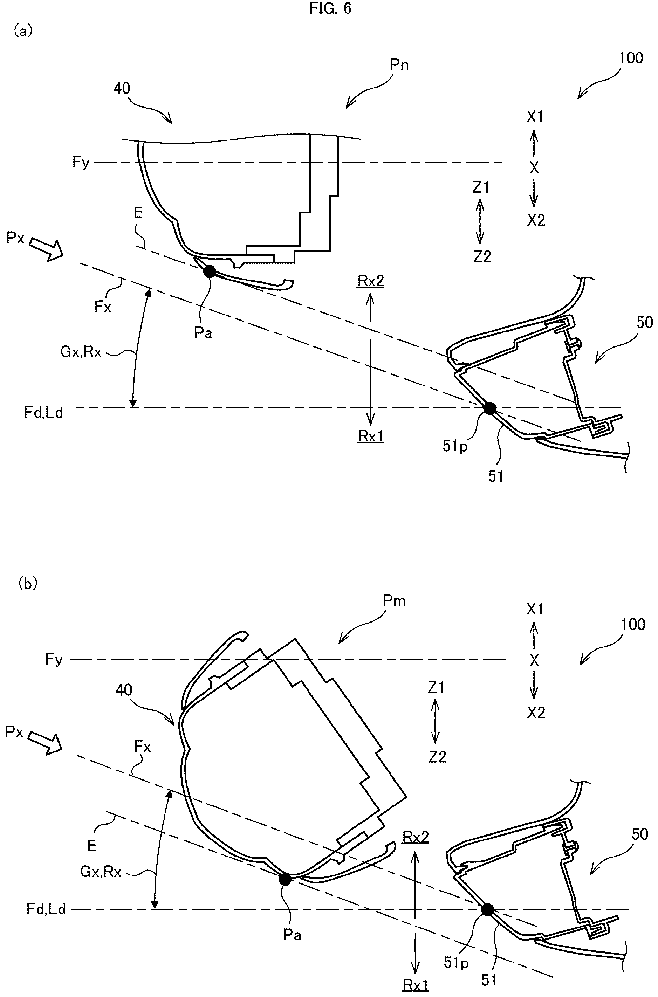

A straddled vehicle 100 according to a variation of the straddled vehicle 1 will now be described with reference to FIG. 6. FIG. 6 schematically shows the positions of a steering mechanism 20 and a flasher outer lens 51 of the straddled vehicle 100 according to a variation of the straddled vehicle 1. (a) illustrates a case of a handlebar neutral position Pn, and (b) illustrates a case of a maximum displacement position Pm. In FIG. 6, cross-sections of a horizontal plane (viewing reference plane) including a flasher center 51p are shown.

The straddled vehicle 100, similarly to the straddled vehicle 1, includes the steering mechanism 20, a cover 10, a flasher 50, and the like. The steering mechanism 20, the cover 10, and the flasher 50 of the straddled vehicle 100 have configurations identical to those of the straddled vehicle 1, and therefore in the description of this variation, they will be denoted by the same reference signs as used in the description of the straddled vehicle 1, without detailed descriptions of them.

In the straddled vehicle 100, the flasher outer lens 51 is arranged farther inward Z1 than the position of the flasher outer lens 51 in the straddled vehicle 1. As shown in FIG. 6(a), the flasher outer lens 51 is at least partially visible from a specific position Px, when the steering mechanism 20 is at the handlebar neutral position Pn. In more detail, as shown in FIG. 6(a), in a case of the handlebar neutral position Pn, the entirety of the flasher outer lens 51 is located farther outward Z2 than a viewing boundary plane E (located in an outward region Rx1). Thus, when the flasher outer lens 51 is viewed from the specific position Px in the case of the handlebar neutral position Pn, the entirety of the flasher outer lens 51 is visible without being hidden by a headlight 40.

In the straddled vehicle 100, the flasher outer lens 51 is configured to be entirely hidden by the headlight 40 when viewed from the specific position Px in a case where the steering mechanism 20 is at the maximum displacement position Pm. In more detail, as shown in FIG. 6(b), in the case of the maximum displacement position Pm, the entirety of the flasher outer lens 51 is located farther inward Z1 than the viewing boundary plane E (located in an inward region Rx2). Thus, in the straddled vehicle 100, when the flasher outer lens 51 is viewed from the specific position Px in the case of the maximum displacement position Pm, the entirety of the flasher outer lens 51 is hidden by the headlight 40 and thus is invisible.

### [Arrangement of Control Unit and Cable]

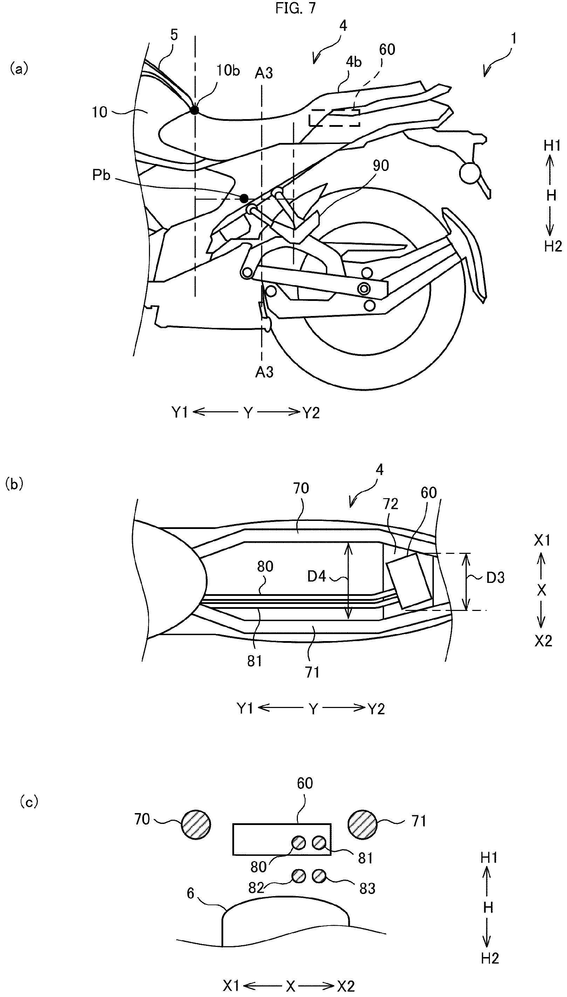

Arrangement of the control unit 60 in the straddled vehicle 1 will now be described with reference to FIG. 7. FIG. 7(a) is a side view showing the position of the control unit 60. FIG. 7(b) is a schematic plan view showing arrangement of the control unit 60. FIG. 7(c) is a schematic diagram showing arrangement of cables at the positions on the line A3-A3 of FIG. 7(a).

The straddled vehicle 1 includes the control unit 60, and upper cables 80, 81 and lower cables 82, 83, which are connected to the control unit 60 (see FIG. 7(c)). The lower cables 82, 83 are cables that are connected to electrical parts arranged farther rearward Y2 than the control unit 60, for example. The lower cables 82, 83 are cables for connecting rear lighting fixtures to a battery, for example.

The control unit 60 is a starter generator control unit (SGCU) for controlling a starter generator, for example. The SGCU controls a starter generator (not shown), which functions as a starter motor for starting an engine by rotating a crankshaft at a time of an engine start, and also functions as a generator that is rotated by the crankshaft after the engine start. A dimension D3 of the control unit 60 in the left-right direction X is not less than 1/2 of a separation distance D4 between two rear frames 70, 71 in the left-right direction X, for example.

As shown in FIG. 7(a), in the straddled vehicle 1, the control unit 60 is arranged downward H2 (under-seat) of the seat 4. For example, the control unit 60 may be disposed in a space downward H2 of the seat 4, the space being downward H2 of a pillion seat portion 4b. As shown in FIG. 7(b), in the straddled vehicle 1, the control unit 60 is arranged such that its longitudinal direction is at an angle relative to the left-right direction X in a plan view. That is, the control unit 60 is arranged diagonally in a layout. This is why openings for insertion of the upper cables 80, 81 to the control unit 60 are oriented diagonally, instead of facing frontward of the vehicle, so that the upper cables 80, 81 are arranged so as to extend diagonally.

As shown in FIG. 7(b), in the straddled vehicle 1, the control unit 60 is disposed between the two rear frames 70, 71. As shown in FIG. 7(c), the control unit 60 is at least partially located farther downward H2 than the two rear frames 70, 71. The straddled vehicle 1 includes the upper cables 80, 81, which are connected to the control unit 60, and the lower cables 82, 83, which are arranged along the rear frames 70, 71 and extend rearward Y2 through the downward H1 of the control unit 60 (see FIG. 7(c)). In the straddled vehicle 1, the upper cables 80, 81 are located farther upward H1 than the lower cables 82, 83, in at least a part of a region that is rearward Y2 of a midpoint Pb between a rear end 10b of the cover 10 of the fuel tank 5 and a rear step 90 in the forward-rearward direction Y (see FIG. 7(c)). That is, in the straddled vehicle 1, the upper cables 80, 81 and the lower cables 82, 83 are structured to form two layers in the up-down direction H when viewed in a direction perpendicular to the forward-rearward direction Y.

Here, a hybrid (a mechanism having an electric motor assist an internal combustion engine) is popular as a four-wheeled vehicle, but to apply the hybrid to a two-wheeled vehicle, it is necessary that both a control unit for a starter generator and a cable for the starter generator are mounted on the vehicle. In the two-wheeled vehicle, a space is limited, to make it difficult to achieve a layout that allows both the control unit and the cable to be arranged. To be specific, at the under-seat of the two-wheeled vehicle, the seat is located upward while a rear fender (tire) is located downward, and to arrange the control unit for the starter generator at the under-seat, the control unit needs to be arranged between the two, left and right rear frames. In this respect, however, a space between the two left and right rear frames serves as a place for arrangement of another electrical part and an electric wire, and therefore laying the control unit 60 flat in addition to them is difficult.

In the straddled vehicle 1 of this embodiment, the upper cables 80, 81 and the lower cables 82, 83 are arranged one above the other in the up-down direction H, so that a space in the seat 4 is obtained, to enable the control unit 60 to be arranged at the under-seat. Thus, in the straddled vehicle 1, the upper cables 80, 81 and the lower cables 82, 83 are arranged one above the other in the up-down direction H (formed as a two-story structure), and thus efficient use of the space at the under-seat can be made, to allow two or more cables to pass therethrough.

In the straddled vehicle 1, the control unit 60 is arranged such that at least a part of it is located farther downward H2 than the rear frames 70, 71. The thickness of the seat 4 is able to be increased (the seat 4 is able to be thickened) accordingly, for improvement of the cushioning of the seat 4.

The straddled vehicle 1 may further include a cross plate 72, which is a sheet metal member that couples the two rear frames 70, 71. For example, the straddled vehicle 1 may be structured such that the control unit 60 is arranged upward of the cross plate 72 while the lower cables 82, 83 (such as a cable for the rear lighting fixture) extend at a location downward H2 of the cross plate 72.

This configuration allows a worker, in assembling, to connect the lower cables 82, 83 without raising the control unit 60 by one hand. Thus, the connection in assembling is easy. In addition, heat of the control unit 60 is able to be dissipated to the cross plate 72, which is made of a metal. Moreover, the under-seat space (the space upward H1 of the rear fender 6) can be used for arrangement of the lower cables 82, 83, which not only allows the lower cables 82, 83 to be arranged without being largely bent but also can limit movement of the lower cables 82, 83 in the up-down direction H.

### (Other Embodiments)

The embodiments and variations, of which at least either one of description or illustration has been given herein, are for ease of understanding the present disclosure, and not for limiting the concept of the present disclosure. The foregoing embodiments and variations may be altered and/or adapted without departing from the scope of the invention as defined by the appended claims. The scope is defined by the appended claims and encompasses modifications, omissions, combinations (for example, a combination of features of any embodiment and any variation), adaptations and/or alterations as would be appreciated by those skilled in the art based on the embodiments disclosed herein. The limitations in Claims are to be broadly interpreted based on the language employed in Claims and not limited to embodiments and variations described herein or during the prosecution of the present application. The embodiments and variations are to be construed as non-exclusive. For example, in this Description, the terms "preferably," "may," and "possible," are non-exclusive and mean "preferably, but not limited to," "may, but not limited to," and "possibly, but not limited to," respectively.

### Reference Signs List

- 1: straddled vehicle
- 2: front wheel
- 5: fuel tank
- 10: cover
- 11: forward surface portion
- 20: steering mechanism
- 21: handlebar
- 22: front fork
- 23: steering shaft
- 24: upper bracket
- 25: lower bracket
- 40: headlight
- 41: headlight outer lens
- 41a: lower end
- 50: flasher
- 51: flasher outer lens
- 100: straddled vehicle
- B: direction corresponding to the lens front view
- Pm: maximum displacement position
- Pn: handlebar neutral position
- Px: specific position
- Rb: flasher up-down range

## Claims

1. A straddled vehicle (100) comprising:
a steering mechanism (20) including a front fork (22), a steering shaft (23), and an upper bracket (24) and a lower bracket (25), the front fork (22) supporting a front wheel, the steering shaft (23) being configured to be rotationally moved in conjunction with a manipulation on a handlebar (21), the upper bracket (24) and the lower bracket (25) coupling the front fork (22) to the steering shaft (23), the steering mechanism (20) being configured to be displaced from a handlebar neutral position (Pn) by a manipulation on the handlebar (21), the handlebar neutral position (Pn) being a position for the vehicle (100) to travel straight;
a headlight (40) configured to rotationally move along with the steering mechanism (20), at least a part of the headlight (40) being arranged between the lower bracket (25) and the upper bracket (24);
a dummy tank or a cover (10) that covers at least a part of a lateral side of a fuel tank (5) in a side view; and
a flasher (50) having an outer lens (51),
the outer lens (51) of the flasher (50) being disposed in a forward surface portion (11) of the dummy tank or the cover (10) such that the outer lens (51) does not move together with the headlight (40) as the handlebar (21) is manipulated, the outer lens (51) of the flasher (50) being located farther rearward than the axis (La) of the front fork (22) at the handlebar neutral position (Pn) in a side view, the outer lens (51) of the flasher (50) being disposed such that at least a half of its full length in up-down direction is located farther upward than a lower end of an outer lens (41) of the headlight (40) at the handlebar neutral position (Pn), the outer lens (51) of the flasher (50) having a horizontally elongated shape so that its full length in horizontal direction is larger than its full length in the up-down direction in a front view of the outer lens (51) of the flasher (50).

2. The straddled vehicle (100) according to claim 1, wherein
the outer lens (51) of the flasher (50) is located such that the entirety of its full length in the up-down direction is located farther upward than the lower end of the outer lens (41) of the headlight (40) at the handlebar neutral position (Pn).

3. The straddled vehicle (100) according to claim 1 or 2, wherein
the flasher (50) further includes an inner lens (52) and a light source (53), and
the inner lens (52) is configured such that light from the light source (53) enters inside of the inner lens (52) through an inward end portion of the inner lens (52) in vehicle width direction, and light incident on the inner lens (52) exits to forward of the vehicle (100).

4. The straddled vehicle (100) according to claim 3, wherein
the inner lens (52) has an attachment portion (56), the attachment portion (56) being disposed in at least either an upward portion or a downward portion of the inner lens (52).

5. The straddled vehicle (100) according to any of claims 1 to 4, wherein
the outer lens (51) of the flasher (50) is configured to be at least partially visible from a specific position in a case where the steering mechanism (20) is at a maximum displacement position.

6. The straddled vehicle (100) according to any of claims 1 to 4, wherein
the outer lens (51) of the flasher (50) is configured to be at least partially visible from a specific position in a case where the steering mechanism (20) is at the handlebar neutral position (Pn), and to be entirely hidden by the headlight (40) when viewed from the specific position in a case where the steering mechanism (20) is at a maximum displacement position.
